(19) Europäisches Patentamt
European Patent Office
Office européen des brevets

(11) Veröffentlichungsnummer: **0 077 755**
**B1**

# (12) EUROPÄISCHE PATENTSCHRIFT

(45) Veröffentlichungstag der Patentschrift: **06.03.85**

(51) Int. Cl.⁴: **C 07 C 103/38**, A 01 N 37/22

(21) Anmeldenummer: **82810421.6**

(22) Anmeldetag: **11.10.82**

(54) **Optisch aktives N-(1'-Methyl-2'-methoxyäthyl)-N-chloracetyl-2-äthyl-6-methylanilin als Herbizid.**

(30) Priorität: **16.10.81 CH 6624/81**

(43) Veröffentlichungstag der Anmeldung: **27.04.83 Patentblatt 83/17**

(45) Bekanntmachung des Hinweises auf die Patenterteilung: **06.03.85 Patentblatt 85/10**

(84) Benannte Vertragsstaaten: **BE CH DE FR GB IT LI NL**

(56) Entgegenhaltungen:
**US - A - 3 937 730**

**CHEMICAL ABSTRACTS, Band 97, Nr. 9, 30. August 1982, Seite 569, Nr. 71671h, Columbus, Ohio, USA H. MOSER et al.: "Effect of atropisomerism and chiral center on the biological activity of Metolachlor"**

(73) Patentinhaber: **CIBA-GEIGY AG, Postfach, CH-4002 Basel (CH)**

(72) Erfinder: **Moser, Hans, Dr., Blumenrain 3, CH-4465 Magden (CH)**
Erfinder: **Vogel, Christian, Dr., Leimgrubenweg 23, CH-4102 Binningen (CH)**

EP 0 077 755 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein Gemisch der Diastereomeren des N-(1'-Methyl-2'-methoxyäthyl)-N-chloracetyl-2-äthyl-6-methylanilins mit aR,1'S(−)- und aS,1'S(−)-Konfiguration, ein Verfahren zu seiner Herstellung, herbizide Mittel, die dieses Gemisch als aktive Komponente enthalten, sowie die Verwendung dieses Gemisches zur Bekämpfung von Unkräutern.

Das N-(1'-Methyl-2'-methoxyäthyl)-N-chloracetyl-2-äthyl-6-methylanilin ist als Gemisch seiner diastereomeren Formen bereits bekannt. Dieses Diastereomerengemisch, seine Herstellung und Verwendung als Pflanzenregulator und Herbizid wird beispielsweise in der US-Patentschrift 3 937 730 beschrieben. Es ist unter dem Trivialnamen »Metolachlor« bekannt.

Im Molekül des N-(1'-Methyl-2'-methoxyäthyl)-N-chloracetyl-2-äthyl-6-methylanilins der Formel I

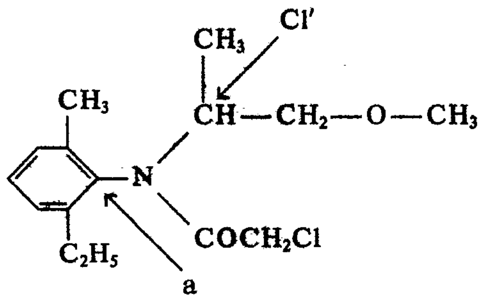

(I)

sind zwei Asymmetrieelemente vorhanden. Das eine, ein chirales Zentrum, befindet sich am Kohlenstoffatom C 1' in der 1'-Methyl-2'-methoxyäthylgruppe und das andere, eine chirale Achse, wird durch die Behinderung der freien Drehbarkeit um die Bindung a zwischen Stickstoffatom und Phenylrest gebildet. Entsprechend dem Vorhandensein von zwei Asymmetrieelementen wird N-(1'-Methyl-2'-methoxyäthyl)-N-chloracetyl-2-äthyl-6-methylanilin bei seiner Herstellung nach den bisher bekannten Methoden als ein Gemisch von 4 diastereomeren Formen erhalten, denen im einzelnen die Konfiguration aR,1'R(−), aS,1'S(+), aR,1'S(−) und aS,1'R(+) zukommt. Über die biologische Wirkung der einzelnen Diastereomeren ist bisher nichts bekannt.

Es wurde nun gefunden, daß ein Gemisch der Diastereomeren des N-(1'-Methyl-2'-methoxyäthyl)-N-chloracetyl-2-äthyl-6-methylanilins mit aR,1'S- und aS,1'S-Konfiguration eine wesentlich bessere herbizide Wirkung besitzt als das bisher bekannte Diastereomerengemisch, das alle möglichen diastereomeren Formen enthält.

Gegenstand der Erfindung ist daher ein negativ drehendes Gemisch der Diastereomeren von N-(1'-Methyl-2'-methoxyäthyl)-N-chloracetyl-2-äthyl-6-methylanilin mit aR,1'S- und aS,1'S-Konfiguration. Das erfindungsgemäße Gemisch der Diastereomeren wird nachfolgend als aRS, 1'S(−) N-(1'-Methyl-2'-methoxyäthyl)-N-chloracetyl-2-äthyl-6-methyl-anilin bezeichnet.

Ein weiterer Gegenstand der Erfindung ist ein Verfahren zur Herstellung eines Gemisches der Diastereomeren von N-(1'-Methyl-2'-methoxyäthyl)-N-chloracetyl-2-äthyl-6-methylanilin mit aR,1'S- und aS,1'S-Konfiguration, das dadurch gekennzeichnet ist, daß man S(−)-N-(2-Äthyl-6-methylphenyl)-anilin der Formel II

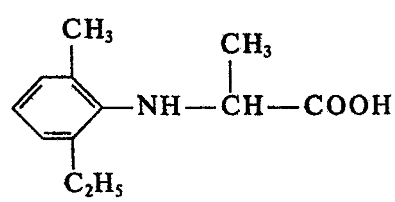

(II)

zu 1'S(−)-N-(1'-Methyl-2'-hydroxyäthyl)-2-äthyl-6-methylanilin der Formel III

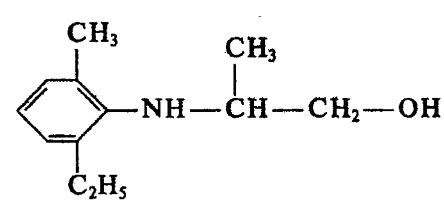

(III)

reduziert, dieses am Stickstoff chloracetyliert und das erhaltene aR,1'S(+)-N-(1'-Methyl-2'-hydroxyäthyl)-N-chloracetyl-2-äthyl-6-methylanilin der Formel IV

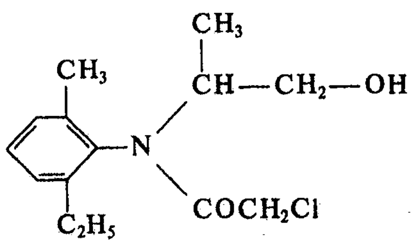 (IV)

anschließend in Gegenwart einer starken Säure mit Methanol an der 2'-Hydroxygruppe veräthert.

Das als Ausgangsmaterial benötigte S(—)-N-(2-Äthyl-6-methylphenyl)-alanin kann erhalten werden, indem man racemisches N-(2-Äthyl-6-methylphenyl)-alanin in einem geeigneten Lösungsmittel mit einer optisch aktiven Base in diastereomere Salze überführt, die diastereomeren Salze durch fraktionierte Kristallisation trennt und anschließend spaltet.

Das racemische N-(2-Äthyl-6-methylphenyl)-alanin kann seinerseits durch Umsetzung von 2-Äthyl-6-methylalanin in Gegenwart einer Base mit einem 2-Halogen-propionsäureester und anschließender Verseifung des Reaktionsproduktes erhalten werden.

Als Lösungsmittel kommen in Betracht: Diidopropyläther, Essigester, Acetonitril, Wasser.

Als optisch aktive Basen können beispielsweise S(+)-2-Amino-1-butanol, R(—)-2-Amino-1-butanol, L-(+)-threo-2-Amino-phenyl-1,3-propandiol, (—)-Brucin, (+)-Chinidin, (—)-Chinin, (—)-Cinchonidin, (+)-Cinchonin, (+)-Dehydroabietylamin, (+)-Yohimbin, (—)-Nikotin, (—)-Ephedrin, (+)-Ephedrin, (—)-N-Methylephedrin, R(+)-1-Phenyläthylamin, S(—)-1-Phenyläthylamin, (+)-Pseudosephedrin und (—)-$\alpha$-Phenyl-$\beta$-p-tolyläthylamin verwendet werden. Unter den vorgenannten optisch aktiven Basen ist R(+)-1-Phenyläthylamin besonders geeignet.

Die Reduktion des S(—)-N-(2-Äthyl-6-methylphenyl)-alanin der Formel II zum 1'S(—)-N-(1'-Methyl--2'-hydroxyäthyl)-2-äthyl-6-methyl-anilin der Formel III erfolgt zweckmäßig in einem inerten Lösungsmittel. Geeignete inerte Lösungsmittel sind beispielsweise aliphatische und aromatische Kohlenwasserstoffe sowie insbesondere Äther. Als Beispiele für geeignete Lösungsmittel seien Hexan, Cyclohexan, Benzol, Toluol, Diäthyläther, Tetrahydrofuran und Dioxan genannt.

Als Reduktionsmittel sind Lithiumaluminiumhydrid und insbesondere Boran geeignet. Das Boran wird vorzugsweise in Form eines Komplexes, insbesondere als Boran-Dimethylsulfid-Komplex oder als Boran-Tetrahydrofuran-Komplex, eingesetzt. Das Reduktionsmittel wird in der Regel in stöchiometrischer Menge bis zu einem Überschuß von 100% bezogen auf die stöchiometrische Menge verwendet. Die Reaktionstemperatur kann zwischen 10° C und dem Siedepunkt des Reaktionsgemisches liegen.

Die Überführung von 1'S(—)-N-(1'-Methyl-2'-hydroxyäthyl)-2-äthyl-6-methylanilin der Formel III in das aRS,1'S(+)-N-(1'Methyl-2-hydroxyäthyl)-N-chloracetyl-2-äthyl-6-methylanilin der Formel IV erfolgt durch Umsetzung mit einem Chloracetylierungsmittel, wie Chloracetylchlorid oder Chloressigsäureanhydrid in Gegenwart einer Base in einem inerten Lösungsmittel. Als Basen sind insbesondere Alkalicarbonate und Hydrogencarbonate sowie tertiäre Amine, wie Triäthylamin und Pyridin, geeignet. Als inerte Lösungsmittel kommen Kohlenwasserstoffe, wie Hexan, Cyclohexan, Benzol, Toluol und Chlorbenzol, in Betracht. Das Chloracetylierungsmittel kann in stöchiometrischer Menge oder in einem geringen Überschuß eingesetzt werden. In der Praxis haben sich Molverhältnisse von S(—)-N-(1'-Methyl-2'-hydroxyäthyl)-2-äthyl-6-methylanilin der Formel III zu Chloracetylierungsmittel von 1 : 1 bis 1 : 1,1 bewährt. Die Umsetzung wird unter Kühlung oder bei mäßig erhöhter Temperatur durchgeführt, wobei sich insbesondere Temperaturen von 0° bis 50° C als geeignet erwiesen haben.

Die Verätherung der 2'-Hydroxygruppe des aRS,1'S(+)-N-(1'-Methyl-2'-hydroxyäthyl)-N-chloracetyl-2-äthyl-6-methylanilins der Formel IV kann vorteilhaft in der Weise durchgeführt werden, daß man die Substanz in Gegenwart einer starken Säure in absolutem Methanol bei Rückflußtemperatur erhitzt. Dabei kommen als starke Säuren insbesondere Schwefelsäure und p-Toluolsulfonsäure in Betracht, wobei die Menge dieser Säuren 0,1 bis 0,3 Mol pro Mol aRS,1'S(+)-N-(1'-Methyl-2'-hydroxyäthyl)-N-chloracetyl-2-äthyl-6-methylanilin der Formel IV betragen kann. Die Verätherung kann vorteilhaft in Gegenwart eines wasserbindenden Mittels durchgeführt werden, wobei als wasserbindende Mittel insbesondere Ketale, wie 2,2-Dimethoxypropan, geeignet sind. Das wasserbindende Mittel wird in äquimolarer Menge oder im Überschuß angewandt.

Das nach dem erfindungsgemäßen Verfahren herstellbare aRS,1'S(—)-N-(1'-Methyl-2'-methoxyäthyl)-N-chloracetyl-2-äthyl-6-methylanilin weist gemäß $^1$H-NMR-spektroskopischer Bestimmung eine optische Reinheit von 98% auf. Es besitzt gegenüber dem bisher bekannten Diastereomerengemisch von N-(1'-Methyl-2'-methoxyäthyl)-N-chloracetyl-2-äthyl-6-methylanilin eine deutlich überlegene herbizide Wirkung gegen Unkräuter, während die Phytotoxizität gegenüber Kulturpflanzen im Vergleich zum bekannten Diastereomerengemisch nicht gesteigert ist.

Es kann daher in bekannter Weise zu herbiziden Mitteln verarbeitet und zur Bekämpfung von Unkräutern in Kulturpflanzen verwendet werden.

Das so erhalten aRS,1'S(—)-N(1'-Methyl-2'-methoxyäthyl)-N-chloracetyl-2-äthyl-6-methyl-anilin ist dem Isomerengemisch in bezug auf die herbizide Wirkung überlegen.

In der vorliegenden Beschreibung wurde die Bezeichnung der absoluten Konfiguration nach »Experentia«, Band 12, Seiten 81—94 (1956) vorgenommen.

Die Erfindung betrifft auch herbizide Mittel, welche das aktive Diastereomere der Formel I enthalten, sowie Verfahren zur pre- oder postemergenten Unkrautbekämpfung.

Die erfindungsgemäßen Mittel können in den üblichen Formulierungen vorliegen und werden in an sich bekannter Weise hergestellt durch Vermischen und Vermahlen von optisch aktiven Wirkstoffen der Formel I mit geeigneten Trägerstoffen, gegebenenfalls unter Zusatz von Dispersions- und Lösungsmitteln. In dieser Weise werden nach bekannten Techniken Stäubemittel, Streumittel, Granulate, Spritzpulver, Pasten, Emulsionen, emulgierbare Konzentrate oder Lösungen hergestellt.

Die Aufwandmengen bei der Bekämpfung von Unkräutern betragen in der Regel 0,1 bis 10 kg Wirkstoff pro ha, vorzugsweise 0,25 bis 5 kg/ha.

Das erfindungsgemäße aRS,1'S(—)-N-(1'-Methyl-2'-methoxyäthyl)-N-chloracetyl-2-äthyl-6-methylanilin erweist sich im Vergleich zum Isomerengemisch den Kulturen Mais und Soja gegenüber verträglicher. Gleichzeitig wurde verstärkte Wirkung gegenüber folgenden Unkrautarten festgestellt: avena fatua (Windhafer) alopecurus myosuroides, cyperus esculentus, amaranthus retroflexus, galium aparine pastinaca sativa, rumex obt. und solanum nigrum. Überraschend und von großer Bedeutung ist die gute Wirkung gegen cyperus esculentus. Dieses weit verbreitete Unkraut trotzt den meisten Herbiziden und wird daher heute den Problemunkräutern zugerechnet. Mit dem erfindungsgemäßen aRS,1'S(—)-N-(1'-Methyl-2'-methyläthyl)-N-chloracetyl-2-äthyl-6-methylanilin kann cyperus esculentus in Nutzpflanzenkulturen mit äußerst geringen Aufwandmengen bekämpft werden. Dabei wird eine Stimulierung des Wurzelwachstums von keimenden Pflanzen beobachtet.

Die Herstellung des erfindungsgemäßen Gemisches der Diastereomeren von N-(1'-Methyl-2'-methyläthyl)-N-chloracetyl-2-äthyl-6-methylanilin mit aRS,1'S- und aS,1'-Konfiguration wird durch die nachstehenden Beispiele näher erläutert. Temperaturen werden in Centigraden angegeben, Teile und Prozentangaben beziehen sich auf das Gewicht.

## Beispiel 1

### Herstellung von racemischen N-(2-Äthyl-6-methyl-phenyl)-alanin

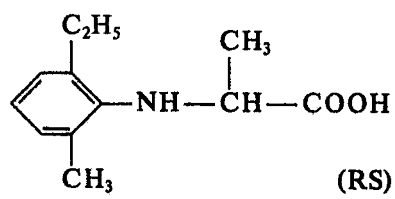

(RS)

#### a) N-(2-Äthyl-6-methyl-phenyl-alaninmethylester

836 ml (6 mol) 2-Äthyl-6-methylanilin, 554 g (6,6 mol) $NaHCO_3$ und 2007 ml (18 mol) 2-Brompropionsäuremethylester werden in einem 4,5 l Sulfierkolben zusammengegeben. Unter Rühren und Überleiten von Stickstoff wird während 1 Stunde langsam auf 120—125°C Badtemperatur erhitzt. Unter $CO_2$-Entwicklung wird die dunkel werdende Mischung 18 Stunden bei dieser Temperatur weitergerührt. Nach dem Abkühlen gießt man das Reaktionsgemisch auf 3 l Eiswasser und extrahiert portionenweise mit Essigester. Die Essigester-Fraktionen werden mit Natriumsulfat getrocknet und am Rotationsverdampfer bei 40°C eingeengt. Der überschüssige 2-Brom-propionsäuremethylester wird am Vakuum abgezogen und der verbleibende Rückstand über eine verspiegelte 60 cm Vigreux-kolonne fraktioniert destilliert. Man erhält 1108 g Ester vom Kp. 141—143°C (12 mbar).

#### b) N-(2-Äthyl-6-methyl-phenyl)-alanin

1015 g (4,58 mol) des obigen Esters werden zusammen mit 3 l 2M Natronlauge bei Raumtemperatur gerührt. Nach 6 Stunden ist die Emulsion in eine Lösung übergegangen, in der nach GC kein Ausgangsmaterial mehr vorhanden ist. Unter Rühren und Kühlen mit Eis wird die alkalische Lösung mit konz. Salzsäure auf pH 4 gestellt. Die sich als Öl ausscheidende Säure wird nach längerem Rühren kristallin. Man gibt bis zur Sättigung festes Kochsalz zu, filtriert ab und wäscht mit Eiswasser nach. Das Nutschgut wird in Essigester aufgenommen, das Wasser abgetrennt und die organische Phase mit Natriumsulfat getrocknet. Nach dem Abdestillieren des Essigesters erhält man die racemische Säure 1 als braunes Öl. Dieses wird aus n-Hexan unter Zusatz von Cyclohexan kristallisiert. Die Ausbeute beträgt 771 g, der Fp. 66—70°C.

c) Racematspaltung des N-(2-Äthyl-6-methyl-phenyl-alanins mit R(+) Phenyläthylamin

352,4 g (1,7 mol) des racemischen N-(2-Ethyl-6-methyl-phenyl)alanins werden unter Rühren in 3,61 g Diisopropyläther mit 222 ml (1,7 mol) R(+)-1-Phenyläthylamin versetzt. Nach kurzer Zeit beginnt das Salz auszukristallisieren. Man läßt über Nacht bei Raumtemperatur stehen, filtriert ab und wäscht mit Diisopropyläther. Das Nutschgut wird abwechselnd aus Essigester und Acetronitril bis zur Konstanz des Schmelzpunktes und des Drehwertes umkristallisiert. Man erhält 164,5 g Phenyläthylamin-Salz mit Fp. 116—118°C; $[\alpha]_D^{20} = -19 \pm 1°$ (c=1,01% in Äthanol).

164 g (0,5 mol) dieses Salzes werden in 1,5 l Essigester und 365 ml 2N Salzsäure 5 Minuten gerührt. Die organische Phase wird abgetrennt, neutral gewaschen, mit Natriumsulfat getrocknet und eingeengt. Durch zweimaliges Umkristallisieren aus n-Hexan werden 84 g S(—)-N-(2-Äthyl-6-methyl-phenyl)-alanin gewonnen. Fp.: 61—63°C; $[\alpha]_D^{20} = -12 \pm 1°$ (c=0,92% in Äthanol).

d) Herstellung von S(—)-N-(1'-Methyl-2'-hydroxyäthyl)-2-äthyl-6-methyl-anilin

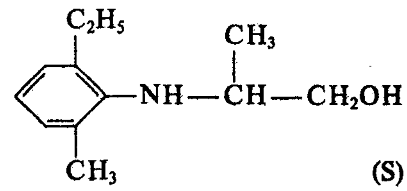

(S)

Eine Lösung von 124 g (0,64 mol) S(—)-N-(2-Äthyl-6-methylphenyl)-alanin in 1200 ml wasserfreiem Tetrahydrofuran wird unter Feuchtigkeitsausschluß und Überleiten von trockenem $N_2$ zum Rückfluß erhitzt.

Nun läßt man sehr langsam 116 ml (1,16 mol) Boran Dimethylsulfid-Komplex zutropfen. Es setzt sofort $H_2$-Entwicklung ein. Nach 20 Stunden Rühren unter Rückfluß wird das Reaktionsgemisch auf 5°C abgekühlt und tropfenweise mit so viel Methanol versetzt, bis sich kein Wasserstoff mehr entwickelt. Man engt am Vakuum ein, nimmt den öligen Rückstand in Äther auf und extrahiert diesen portionenweise mit insgesamt 400 ml 2N Salzsäure. Die wäßrig-salzsauren Phasen werden vereinigt, unter Eiskühlung mit konz. Natronlauge auf pH 8 gestellt und mit Äther ausgeschüttelt. Die Äther-Fraktion wird mit Wasser gewaschen, getrocknet und eingedampft. Nach dem Destillieren des Rückstandes am Hochvakuum erhält man 104 g S(—)-N-(1'-Methyl-2'-hydroxyäthyl)-2-äthyl-6-methylanilin. Kp.: 103—105°C ($10^{-3}$ mbar); $[\alpha]_D^{20} = -7 \pm 1°$ (c=1,941% in Methanol).

e) Herstellung von
aRS,1'S(+)-N-(1'-Methyl-2-hydroxyäthyl)-N-chloracetyl-2-äthyl-6-methyl-anilin

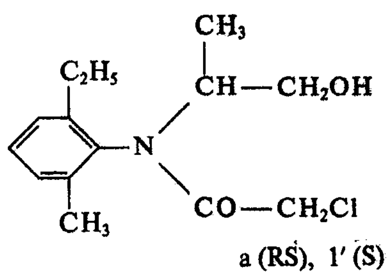

a (RS), 1' (S)

105 g (0,542 mol) S(—)-N-(1'-Methyl-2'-hydroxyäthyl)-2-äthyl-6-methyl-anilin werden mit 54,6 g (0,515 mol) Natriumcarbonat in 800 ml Benzol vermischt. Unter gutem Rühren läßt man bei 15—20°C langsam 41 ml (0,515 mol) Chloracetylchlorid zutropfen. Das Reaktionsgemisch wird anschließend 3 Stunden beim Raumtemperatur ausgerührt und dann filtriert. Das Benzol-Filtrat wird mit Essigester verdünnt und im Schneidetrichter mit Wasser, 2M Salzsäure, 105iger Natriumbicarbonatlösung und gesättigter Kochsalzlösung ausgeschüttelt. Die organische Phase trocknet man mit Natriumsulfat und engt sie am Rotationsverdampfer ein. Das als Rückstand verbleibende, gelbe Öl wird bei 40°C am Hochvakuum getrocknet und dann direkt weiterverarbeitet. Ausbeute: 135 g. $[\alpha]_D^{20} = +12 \pm 1°$ (c=1,166% in Methanol).

f) Herstellung von
aRS,1'S(—)-N-(1-Methyl-2'-methoxyäthyl)-N-chlor-acetyl-2-äthyl-6-methyl-anilin

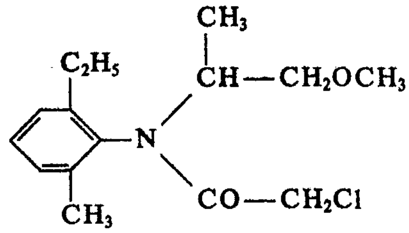

a (RS), 1' (S)

30,9 g (0,114 mol) aRS,1'S(+)-N-(1-Methyl-2'-hydroxyäthyl)-N-chlor-acetyl-2-äthyl-2-methyl-anilin, 23,8 ml (0,228 mol) 2,2-Dimethoxypropan und 3,5 g p-Toluolsulfonsäure werden in 175 ml abs. Methanol gelöst und 36 Stunden unter Rückfluß erhitzt. Nach dem Abkühlen auf Raumtemperatur wird das dunkel gewordene Reaktionsgemisch eingedampft, der Rückstand in Essigester aufgenommen und mit 10%iger Natriumbicarbonatlösung und mit Wasser extrahiert. Die organische Lösung trocknet man mit Natriumsulfat und engt sie am Vakuum ein. Das zurückbleibende Öl wird am Hochvakuum fraktioniert destilliert.

Fraktion I:
2,3 g; Kp.: 124—126° C (0,04 mbar)
$[\alpha]_D^{20} = -8 \pm 1°$ (c=2,946% in n-Hexan)

Fraktion II:
9,9 g; Kp.: 126—127° C (0,04 mbar)
$[\alpha]_D^{20} = -9 \pm 1°$ (c=2,073% in n-Hexan)
Optische Reinheit: 98%.

Beispiel 2

Zum Nachweis der guten Wirkung wurden in einem Herbizidversuch im Gewächshaus das erfindungsgemäße aRS,1'S(—)-Isomere und das Isomerengemisch des N-(1'-Methyl-2-methoxyäthyl)-N-chloracetyl-2-äthyl-6-methyl-anilin verglichen. Beide Wirkstoffe wurden zu einem 25%igen Emulsionskonzentrat folgender Zusammensetzung aufgearbeitet:

25 Teile Wirkstoff
5 Teile einer Mischung von Nonylphenolpolyoxyäthylen und Calciumdodecylbenzolsulfat
15 Teile Cyclohexanon
55 Teile Xylol.

Dieses Konzentrat wurde dann mit Wasser bis zu der gewünschten Wirkstoffkonzentration verdünnt.
Die herbizide Wirkung wurde wie folgt ermittelt:

Pre-emergente Herbizid-Wirkung (Keimhemmung)

Im Gewächshaus wurden Pflanzensamen in Töpfe von 12—15 cm Durchmesser gesät. Unmittelbar danach wurde die Erdoberfläche mit einer wäßrigen Dispersion der Versuchspflanzen, erhalten aus dem Emulsionskonzentrat, behandelt. Es wurden Konzentrationsreihen angewendet, und die Menge Wirkstoff, die aufgetragen wurde, betrug zwischen 1 kg und 62,5 g pro Hektar. Die Töpfe wurden dann im Gewächshaus bei einer Temperatur von 22—25° und 50—70% relativer Luftfeuchtigkeit gehalten und der Versuch nach 3 Wochen ausgewertet und die Resultate nach folgender otenskala bonitiert:

1 = Pflanzen nicht gekeimt oder total abgestorben
2—3 = sehr starke Wirkung
4—6 = mittlere Wirkung
7—8 = geringe Wirkung
9 = keine Wirkung (wie unbehandelte Kontrolle).

Die Resultate sind in den untenstehenden Tabellen zusammengefaßt: Unter »Metolachlor« wird das bisher verwendete, nicht aufgetrennte racemische Gemisch aller möglichen diastereomeren Formen verstanden.

Die stark überlegene Wirkung gegen die Unkräuter cyperus, echinochloa, panicum, sorghum, portulaca und amaranthus kommt bei den niederen Aufwandmengen schön zur Geltung. Da die Toleranz gegenüber den Kulturpflanzen oberhalb 1 kg Aufwandmenge pro Hektare für das Racemat und den optisch aktiven Wirkstoff dieselbe ist, ist dieser weit selektiver und sicherer in der Anwendung zur Unkrautbekämpfung. Das Problemunkraut cyperus esculentus z. B. wird durch die optisch aktive Form schon bei 62,5—125 g pro Hektar wirkungsvoll geschädigt, während man, um dieselbe Wirkung zu haben, nahezu 500 g des Racemates einsetzen muß.

| | Wirkstoff »Metolachlor« (Racemat) | | | | | aRS,1'S(—)-Diastereomerengemisch | | | | |
|---|---|---|---|---|---|---|---|---|---|---|
| | Aufwandmenge, kg/ha | | | | | | | | | |
| | 1000 | 500 | 250 | 125 | 62,5 | 1000 | 500 | 250 | 125 | 62,5 |
| Mais | 8 | 9 | 9 | 9 | 9 | 9 | 9 | 9 | 9 | 9 |
| Soja | 9 | 9 | 9 | 9 | 9 | 9 | 9 | 9 | 9 | 9 |
| Zuckerrübe | 8 | 9 | 9 | 9 | 9 | 8 | 9 | 9 | 9 | 9 |
| Baumwolle | 9 | 9 | 9 | 9 | 9 | 9 | 9 | 9 | 9 | 9 |
| Cyperus esculentus | 1 | 1 | 5 | 6 | 8 | 1 | 1 | 1 | 3 | 4 |
| Echinochloa crus galli | 1 | 1 | 2 | 3 | 5 | 1 | 1 | 1 | 2 | 3 |
| Panicum mil. | 1 | 2 | 4 | 4 | 8 | 1 | 1 | 2 | 4 | 9 |
| Pennisetum cland. | 1 | 2 | 4 | 8 | 9 | 1 | 3 | 3 | 6 | 8 |
| Setaria italica | 1 | 1 | 1 | 2 | 3 | 1 | 1 | 1 | 2 | 2 |
| Sorghum halepense | 1 | 3 | 6 | 6 | 9 | 1 | 1 | 3 | 8 | 9 |
| Sorghum sudan. | 2 | 2 | 8 | 9 | 9 | 1 | 1 | 3 | 5 | 8 |
| Lolium perenne | 1 | 2 | 3 | 4 | 7 | 2 | 2 | 2 | 3 | 5 |
| Bromus tectorum | 2 | 5 | 7 | 8 | 9 | 2 | 3 | 5 | 7 | 8 |
| poa trivialis | 2 | 4 | 5 | 8 | 9 | 2 | 2 | 4 | 6 | 6 |
| Portulaca ol | 1 | 5 | 9 | 9 | 9 | 1 | 1 | 6 | 9 | 9 |
| Amaranthus retr. | 1 | 1 | 3 | 6 | 8 | 1 | 1 | 1 | 2 | 4 |

**Patentansprüche**

1. Optisch aktives aRS,1'S(—)-N-(1'-Methyl-2'-methoxyäthyl)-N-chloracethyl-2-äthyl-6-methylanilin der Formel

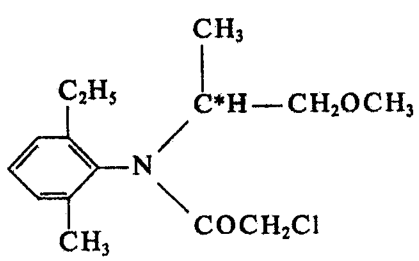

(I)

2. Verfahren zur Herstellung von aRS,1'S(—)-N-1'-Methyl-2'-methoxyäthyl)-N-chloracetyl-2-äthyl-6-methyl-anilin, dadurch gekennzeichnet, daß man S(—)-N-(2-Äthyl-6-methylphenyl)-alanin der Formel II

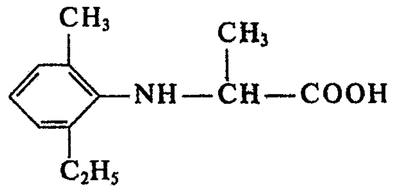

(II)

zu 1'S(—)-N-(1'-Methyl-2'-hydroxyäthyl)-2-äthyl-6-methylanilin der Formel III

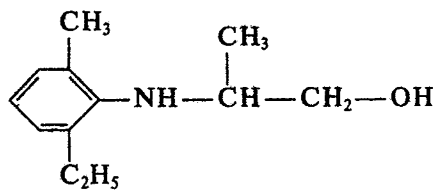

(III)

reduziert, dieses am Stickstoff chloracetyliert und das erhaltene aRS,1'S(+)-N-(1'-Methyl-2'-hydroxyäthyl)-N-chloracetyl-2-äthyl-6-methylanilin der Formel IV

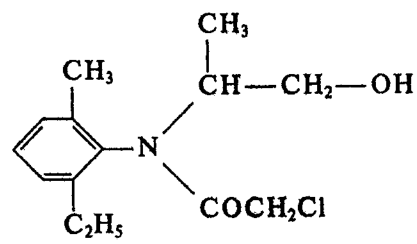

(IV)

anschließend in Gegenwart einer starken Säure mit Methanol an der 2'-Hydroxygruppe veräthert.

3. Herbizides Mittel, dadurch gekennzeichnet, daß es neben inerten Zutaten als Wirkstoff das optisch aktive aRS,1'(S)-N-(1'-Methyl-2'-methoxyäthyl)-N-chloracetyl-2-äthyl-6-methylanilin enthält.

4. Verfahren zur Bekämpfung von Unkräutern in Kulturen von Nutzpflanzen, dadurch gekennzeichnet, daß man die Nutzpflanzen resp. deren Anbaufläche mit einer wirksamen Menge von aRS,1'S(—)-N-(1'-methyl-2'-methoxyäthyl)-N-chloracetyl-2-äthyl-6-methyl-anilin behandelt.

5. Verfahren gemäß Anspruch 4 zur Bekämpfung von Unkräutern in Kulturen von Mais, Weizen, Soja und Zuckerrüben.

6. Verfahren gemäß Anspruch 4 und 5 zur speziellen Bekämpfung von Cyperus esculentus.

**Claims**

1. Optically active aRS,1'S(—)-N-(1'-methyl-2'-methoxyethyl)-N-chloracetyl-2-ethyl-6-methylaniline of the formula

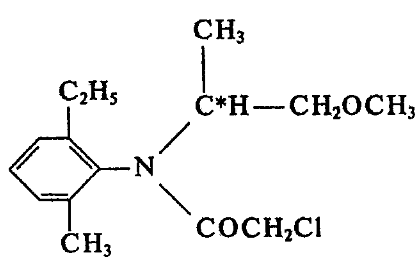

(I)

2. A process for the preparation of aRS,1'S(—)-N-(1'-methyl-2'-methoxyethyl)-N-chloroacetyl-2-ethyl-6-methylaniline, which process comprises reducing S(—)-N-(2-ethyl-6-methylphenyl)alanine of the formula II

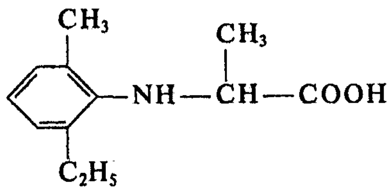

(II)

to 1′S(−)-N-(1′-methyl-2′-hydroxyethyl)-2-ethyl-6-methylaniline of the formula III

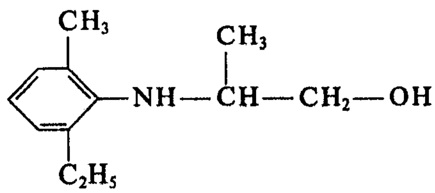

(III)

chloroacetylating the compound of formula (III) at the nitrogen and subsequently etherifying the resultant aRS,1′S(+)-N-(1′-methyl-2′-hydroxyethyl)-N-chloroacetyl-2-ethyl-6-methylaniline of the formula IV

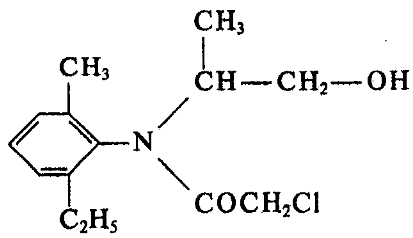

(IV)

in the presence of a strong acid, with methanol, at the 2′-hydroxy group.

3. A herbicidal composition which contains as active ingredient optically active aRS,1′S(−)-N-(1′methyl-2′-methoxyethyl)-N-chloroacetyl-2-ethyl-6-methylaniline, together with inert adjuvants.

4. A method of controlling weeds in crops of cultivated plants, which comprises treating said plants or the locus thereof with a herbicidally effective amount of aRS,1′S(−)-N-(1′-methyl-2′-methoxyethyl)-N-chloroacetyl-2-ethyl-6-methylaniline.

5. A method according to claim 4 for controlling weeds in crops of maize, wheat, soybeans and sugar beat.

6. A method according to either of claim 4 or claim 5 for the specific control of Cyperus esculentus.

**Revendications**

1. aRS,1′S(−)-N-(1′-méthyl-2′-méthoxyéthyl)-N-chloracétyl-2-éthyl-6-méthylaniline de formule

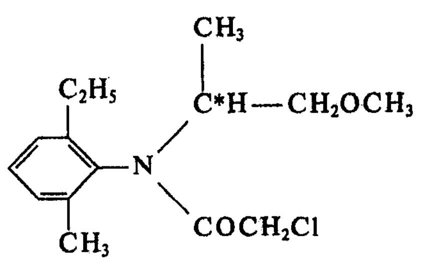

(I)

2. Procédé de préparation de aRS,1′S(−)-N-1′-méthyl-2′-méthoxyéthyl)-N-chloracétyl-2-éthyl-6-méthyl-aniline, caractérisé en ce qu'on réduit la S(−)-N-(2-éthyl-6-méthylphényl)-aniline de formula II

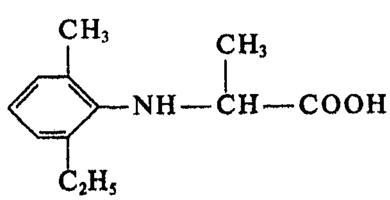

(II)

pour donner la 1'S(—)-N-(1'-méthyl-2'-hydroxyéthyl)-2-éthyl-6-méthylaniline de formule III

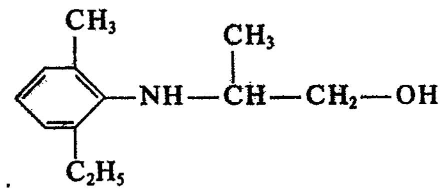

(III)

en ce qu'on chloracétyle celle-ci sur l'atome d'azote puis on éthérifie la aRS,1'S(+)-N-(1'-méthyl-2'-hydroxyéthyl)-N-chloracétyl-2-éthyl-6-méthylaniline obtenue de formule IV

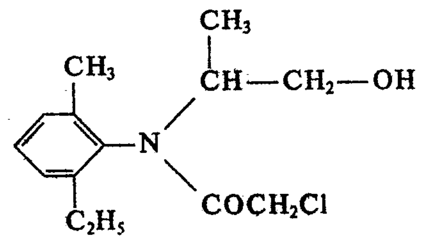

(IV)

en présence d'un acide fort avec de méthanol sur le groupe 2'-hydroxy.

3. Agent herbicide, caractérisé en ce qu'il contient, outre des composants inertes, comme matière active la aRS,1'(S)-N-(1'-méthyl-2'-méthoxyéthyl)-N-chloracétyl-2-éthyl-6-méthylaniline optiquement active.

4. Procédé de lutte contre les mauvaises herbes dans les cultures de plantes utiles, caractérisé en ce qu'on traite les plantes utiles ou leurs surfaces cultivées avec une quantité efficace de aRS,1'S(—)-N-(1'-méthyl-2'-méthoxyéthyl)-N-chloracétyl-2-éthyl-6-méthyl-aniline.

5. Procédé selon al revendication 4 de lutte contre les mauvaises herbes dans les cultures de maïs, de blé, de soja et de betterave.

6. Procédé selon les revendications 4 et 5 de lutte spéciale contre Cyperus esculentus.